# EUROPEAN PATENT APPLICATION

(11) **EP 2 509 385 A1**
(43) Date of publication of application: **10.10.2012**
(21) Application number: 12162664.2
(22) Date of filing: 30.03.2012
(51) Int. Cl.: H04W 76/02

(54) **Wireless communication system, user terminal, base station, and communication method**

(30) Priority: 04.04.2011 JP 2011083091
(71) Applicant: Fujitsu Limited, Kawasaki-shi, Kanagawa 211-8588 (JP)
(72) Inventor: Nakahara, Tohru, 211-8588, Kanagawa 211-8588 (JP)
(74) Representative: Holz, Ulrike

(57) **Abstract**

A user terminal performs wireless communication with a base station in a wireless communication system. The user terminal includes a generating unit configured to generate a call connection control signal including a control signal to be used when call connection is performed between the user terminal and the base station; a transmitting unit configured to transmit, to the base station, the generated call connection control signal; and a requesting unit configured to transmit a call connection request to the base station according to an operation for making a call. The call connection control signal transmitted from the user terminal is stored by the base station, and the stored call connection control signal is used by the base station according to the call connection request from the user terminal to perform the call connection between the user terminal and the base station.

## Description

### FIELD

The embodiments discussed herein are related to a wireless communication system.

### BACKGROUND

When connecting to a wireless network, the user pushes a call button of a mobile machine. As the call button of the mobile machine is pushed, control signals are transmitted from the mobile machine, and connection to the wireless network is started.

Radio Resource Control (RRC) messages are known in relation to call connection in a wireless communication system (see, for example, non-patent document 1).

When connecting to a wireless network, the mobile machine is operated to make a call, control signals for call connection are transmitted from the mobile machine, and a call connection process is started. Specifically, the call connection process starts by pushing the call button. When the call connection process starts, control signals are exchanged between the mobile machine and the base station. After exchanging control signals, the call connection ends.

The time from when the mobile machine is operated to make a call to when the call connection ends is preferably short.

Non-patent document 1: 3GPP TS36.331 V10.0.0 2010 12

### SUMMARY

Accordingly, it is an object in one aspect of the invention to provide a wireless communication system in which the time required for call connection is reduced.

According to an aspect of the present invention, a wireless communication system includes a user terminal; and a base station configured to perform wireless communication with the user terminal, wherein the user terminal includes a call connection control signal generating unit configured to generate a call connection control signal including a control signal to be used when call connection is performed between the user terminal and the base station, a call connection control signal transmitting unit configured to transmit, to the base station, the call connection control signal generated by the call connection control signal generating unit, and a call connection request transmitting unit configured to transmit a call connection request to the base station according to an operation for making a call, wherein the base station includes a call connection control signal receiving unit configured to receive the call connection control signal from the user terminal, a storage unit configured to store the call connection control signal received by the call connection control signal receiving unit, and a call control signal virtual processing unit configured to perform the call connection between the base station and the user terminal with the use of the call connection control signal stored in the storage unit, according to the call connection request from the user terminal.

### BRIEF DESCRIPTION OF THE DRAWINGS

FIG. 1 illustrates a wireless communication system according to an embodiment;
FIG. 2 is a block diagram of a user terminal according to an embodiment;
FIG. 3 is a functional block diagram of the user terminal according to an embodiment;
FIG. 4 illustrates a call connection control signal according to an embodiment;
FIG. 5 is a block diagram of a base station according to an embodiment;
FIG. 6 is a functional block diagram of the base station according to an embodiment;
FIG. 7 indicates a call connection control signal storage table according to an embodiment;
FIG. 8 is a functional block diagram of an MME according to an embodiment;
FIG. 9 indicates a sequence chart of operations of the wireless communication system according to an embodiment; and
FIG. 10 indicates a sequence chart of operations of the wireless communication system according to a modification.

### DESCRIPTION OF EMBODIMENTS

Preferred embodiments of the present invention will be explained with reference to accompanying drawings.

In all drawings for describing the embodiments, elements having the same function are denoted by the same reference numerals and redundant descriptions are omitted.

### Wireless communication system

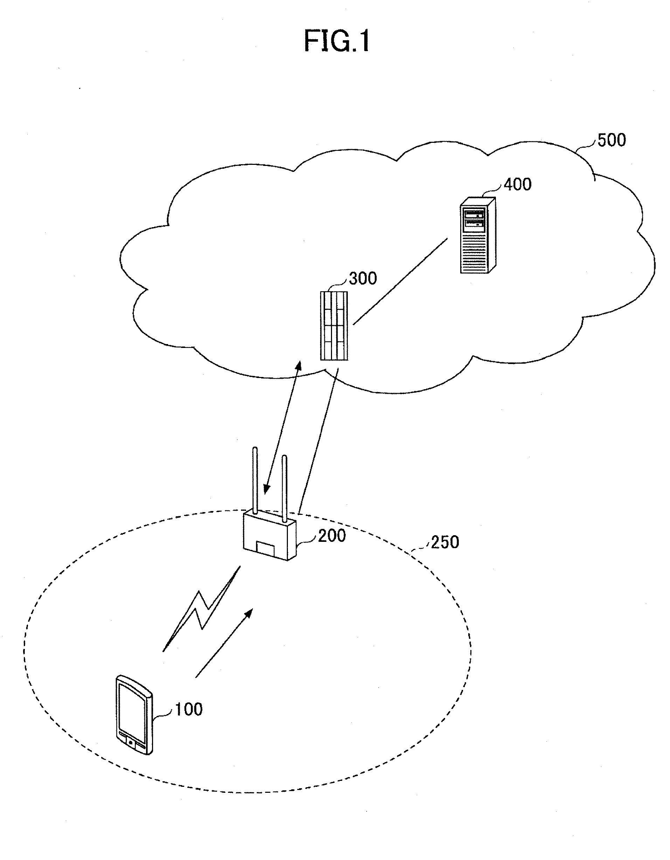

FIG. 1 illustrates a wireless communication system according to an embodiment.

The wireless communication system includes a user terminal (UE: User Equipment) 100 and a base station (eNB: eNodeB) 200.

The base station 200 is connected to an MME 300. The MME 300 is included in a core network 500. The core network 500 may also be referred to as an EPC (Evolved Packet Core). The area covered by the base station 200 may include one or more cells. In the example of FIG. 1, one cell 250 is indicated.

The MME 300 is connected to the base station 200 via a S1 interface. Furthermore, the MME 300 is connected to a serving gateway 400. The MME 300 may be realized by a switching center. The MME 300 manages the movement of the user terminal 100. Specifically, the MME 300 performs processes relevant to management of movement between 3GPP access networks, management of a tracking area (position registration area) list, selection of a gateway (GW) of a packet data network (PDN), selection of a serving gateway (GW), selection of a switching center (MME) in hand over, roaming, authentication, management of a wireless access bearer, management of subscriber information, movement management, outgoing/incoming call control, charge control, and Quality of Service (QoS) control.

The base station 200 may include a micro base station. The micro base station is provided for realizing a call area in a home or in a small scale store. For example, a femto micro base station (HeNB: Home eNB) (hereinafter, "femto base station") may be installed on a tower or on the rooftop of a building, other than in a home or a small scale store. The femto base station has a limited call area having a radius of approximately several tens of meters.

The user terminal 100 performs wireless communication with the base station 200 according to, for example, specifications of LTE (Long Term Evolution). The specifications of LTE are created by 3GPP (3rd Generation Partnership Project) that is a standardization body of mobile communication systems. With LTE, high speed communications of greater than or equal to 100 Mbps in a reverse link and greater than or equal to 50 Mbps in an uplink are implemented. Therefore, delays are improved and the usage efficiency of frequencies is enhanced.

A description is given of a case where wireless communication is performed between a user terminal and a femto base station according to LTE. However, the specifications are not limited to LTE. For example, the wireless communication may be performed according to GSM (Global System for Mobile Communications) or LTE-Advanced (LTE Rel. 10 and beyond). Furthermore, the following example is also applicable to wireless communication performed between a STA (Station) and an AP (Access Point) in a wireless LAN. For example, the following example is also applicable to wireless communication performed between the STA and the AP according to IEEE802.11.

The user terminal 100 is positioned in an area covered by the base station 200. The user terminal 100 transmits, to the base station 200, a control signal for call connection (hereinafter, "call connection control signal"), before the user terminal 100 makes a call. The call connection control signal includes one or more control signals that are to be transmitted from the user terminal 100 to the base station 200 when making the call connection. For example, when registering a position, the user terminal 100 may transmit the call connection control signal to the base station 200 in whose range the user terminal 100 is located. The user terminal 100 may transmit, to the base station 200, control signals to be transmitted when making the call connection at once, as call connection control signals.

Furthermore, when the user terminal 100 is operated to make a call, the user terminal 100 transmits a signal for starting procedures for call connection (hereinafter, "call connection procedure starting signal"). A signal for starting procedures for call connection is also referred to as a "RRC CONNECTION REQUEST". For example, when a call button of the user terminal 100 is pushed, the call connection procedure starting signal is transmitted. When the call connection procedure starting signal is transmitted from the user terminal 100 and the base station 200 receives the call connection procedure starting signal, the call connection procedure is started.

The base station 200 covers the cell 250. The base station 200 registers the user terminal to be connected with the base station 200. The registered user terminal may occupy the resources of the base station 200. The resources include a wireless resource. The base station 200 stores the call connection control signal from the user terminal 100. When the call connection procedure starting signal is received from the user terminal 100, the base station 200 uses the call connection control signal that has been stored in advance to execute a call connection process. When executing the call connection process, the base station 200 exchanges control signals with the MME 300.

### User terminal

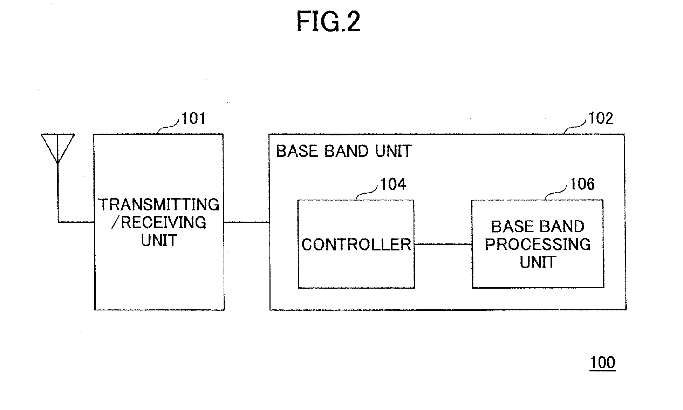

FIG. 2 illustrates the user terminal 100 according to an embodiment.

The user terminal 100 includes a transmitting/receiving unit 101 and a base band unit (BBU) 102. The base band unit 102 is connected to the transmitting/receiving unit 101.

The transmitting/receiving unit 101 exchanges wireless signals with the base station 200. The wireless signals received by an antenna are amplified and input to the transmitting/receiving unit 101. The transmitting/receiving unit 101 converts the wireless signals into frequencies, and inputs the frequencies into the base band unit 102. The transmitting/receiving unit 101 converts the signals from the base band unit 102 into wireless signals, and transmits the wireless signals via the antenna.

The base band unit 102 includes a controller (CNT) 104. The controller 104 is connected to the base band unit 102. The controller 104 performs call control. Furthermore, the controller 104 performs protocol control.

The base band unit 102 includes a base band processing unit 106. The base band processing unit 106 is connected to the controller 104. The base band processing unit 106 performs a base band process according to instructions from the controller 104. The base band signals that have undergone the base band process by the base band processing unit 106 are converted into wireless signals by an RF unit (not illustrated), and are transmitted to the base station 200 by wireless communication.

### Functions of the user terminal

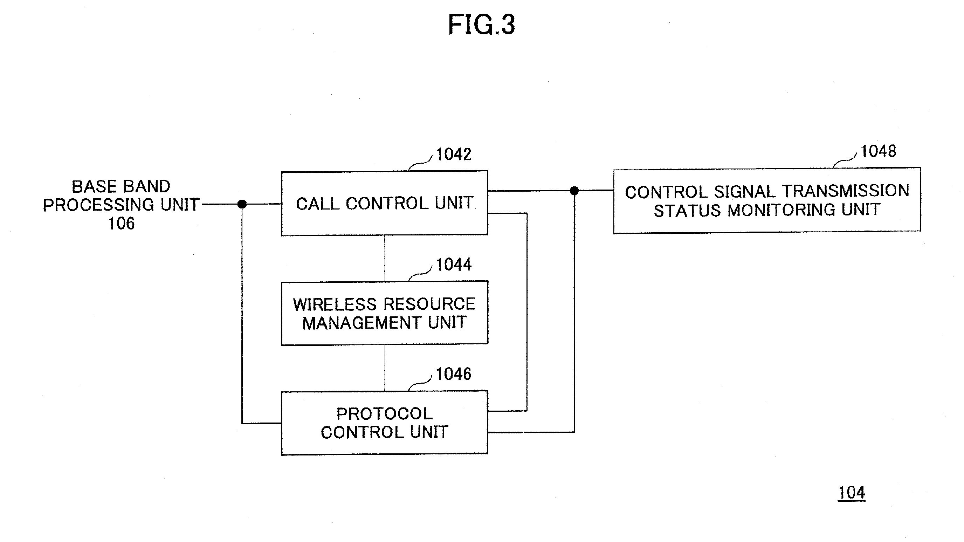

FIG. 3 illustrates the user terminal 100 according to an embodiment. FIG. 3 mainly indicates the functions of the controller 104.

Functions of the controller 104 include a function executed by a call control unit 1042. The call control unit 1042 is connected to the base band processing unit 106. The call control unit 1042 determines whether to perform a call connection process. For example, the call control unit 1042 determines to perform the call connection process when a user makes an operation for call connection. Specifically, when the user pushes the call button, the call control unit 1042 determines to perform the call connection process. Furthermore, the call control unit 1042 executes a call connection process when it is determined to perform a call connection process. Specifically, the call control unit 1042 controls the base band processing unit 106 to transmit a call connection procedure starting signal.

Furthermore, the call control unit 1042 determines whether to transmit a call connection control signal. For example, when a call connection control signal has not been transmitted to a base station in whose range the user terminal 100 is located, the call control unit 1042 determines to transmit a call connection control signal. For example, the call control unit 1042 may determine to transmit a call connection control signal when the position of the user terminal 100 is registered. Furthermore, even after the position is registered, when it is determined that a call connection control signal has not been transmitted to a base station in whose range the user terminal 100 is located, the call control unit 1042 may determine to transmit a call connection control signal. When it is determined to transmit a call connection control signal, the call control unit 1042 instructs a protocol control unit 1046 to establish the call connection control signal.

Furthermore, at the time of transmitting a call connection procedure starting signal, when a call connection control signal has not been transmitted to a base station in whose range the user terminal 100 is located, the call control unit 1042 may determine to transmit control signals. Furthermore, at the time of a transmitting call connection procedure starting signal, when a call connection control signal has not been transmitted to a base station in whose range the user terminal 100 is located, the call control unit 1042 may determine to transmit a call connection control signal. When it is determined to transmit a call connection control signal or control signals, the call control unit 1042 instructs the protocol control unit 1046 to establish the call connection control signal or control signals.

Functions of the controller 104 include a function executed by a wireless resource management unit 1044. The wireless resource management unit 1044 is connected to the call control unit 1042. The wireless resource management unit 1044 manages wireless resources. Specifically, the wireless resource management unit 1044 manages wireless resources that are to be assigned by the base station 200.

Functions of the controller 104 include a function executed by the protocol control unit 1046. The protocol control unit 1046 is connected to the base band processing unit 106, the call control unit 1042, and the wireless resource management unit 1044. The protocol control unit 1046 establishes call connection control signals and control signals according to the control of the call control unit 1042. The protocol control unit 1046 controls the base band processing unit 106 to transmit call connection control signals and control signals. The base band processing unit 106 performs a base band process for transmitting the call connection control signals and control signals according to the control of the protocol control unit 1046. The call connection control signals and control signals that have undergone the base band process are converted into wireless signals and transmitted to the base station 200.

Furthermore, the protocol control unit 1046 resolves and analyzes the control signals from the base station 200.

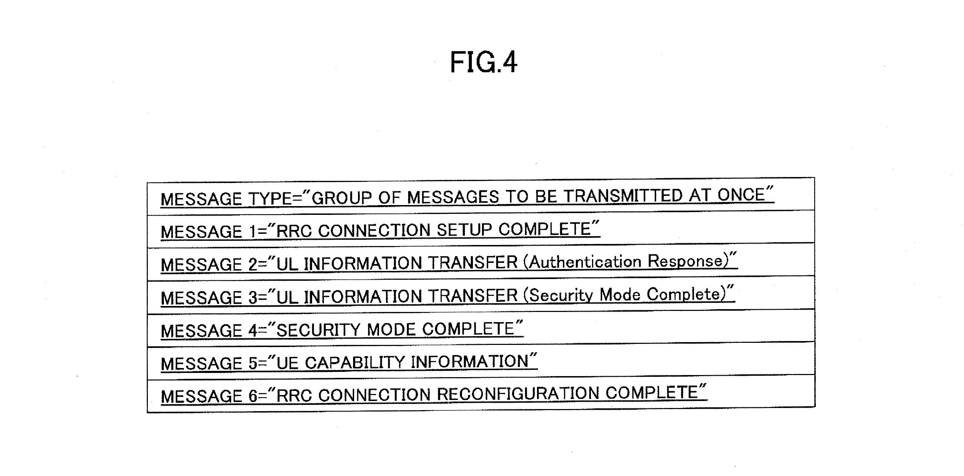

FIG. 4 illustrates a call connection control signal according to an embodiment. The call connection control signal includes control signals to be used when making a call connection between the user terminal 100 and the base station 200. Specifically, the call connection control signal includes control signals that are to be transmitted from the user terminal 100 to the base station 200 at the time of call connection. In the example of FIG. 4, the call connection control signal includes six control signals, among the control signals that are to be transmitted from the user terminal 100 to the base station 200 at the time of call connection. The call connection control signal may include one through five control signals, or seven or more control signals. The number of control signals to be included in a call connection control signal may be set to any appropriate number.

Specifically, the call connection control signal includes "RRC CONNECTION SETUP COMPLETE" as message 1. Furthermore, the call connection control signal includes "UL INFORMATION TRANSFER (Authentication Response)" as message 2. Furthermore, the call connection control signal includes "UL INFORMATION TRANSFER (Security Mode Complete)" as message 3. Furthermore, the call connection control signal includes "SECURITY MODE COMPLETE" as message 4. Furthermore, the call connection control signal includes "UE CAPABILITY INFORMATION" as message 5. Furthermore, the call connection control signal includes "RRC CONNECTION RECONFIGURATION COMPLETE" as message 6.

Functions of the controller 104 include a function executed by a control signal transmission status monitoring unit 1048. The control signal transmission status monitoring unit 1048 is connected to the call control unit 1042 and the protocol control unit 1046. The control signal transmission status monitoring unit 1048 monitors whether a call connection control signal has been transmitted. The control signal transmission status may be monitored in units of base stations or in units of networks. Specifically, for each base station, a flag for expressing whether a call connection control signal has been transmitted is provided. When a call connection control signal has been transmitted, the flag corresponding to the base station that is the transmission destination of the call connection control signal indicates "transmitted". A flag for expressing whether a call connection control signal has been transmitted may be provided for each network. When a call connection control signal has been transmitted, the flag corresponding to the network that is the transmission destination of the call connection control signal indicates "transmitted". The control signal transmission status monitoring unit 1048 monitors the access status between the user terminal 100 that has transmitted the call connection control signal and the base station 200 or the network, at predetermined cycles. As a result of monitoring the access status, when there is a base station 200 or network that is not accessed for a predetermined period, the flag corresponding to the base station 200 or network may indicate "not transmitted". The base station 200 or network may be set to delete a call connection control signal of the user terminal 100 that has not been accessed for a predetermined time.

### Base station

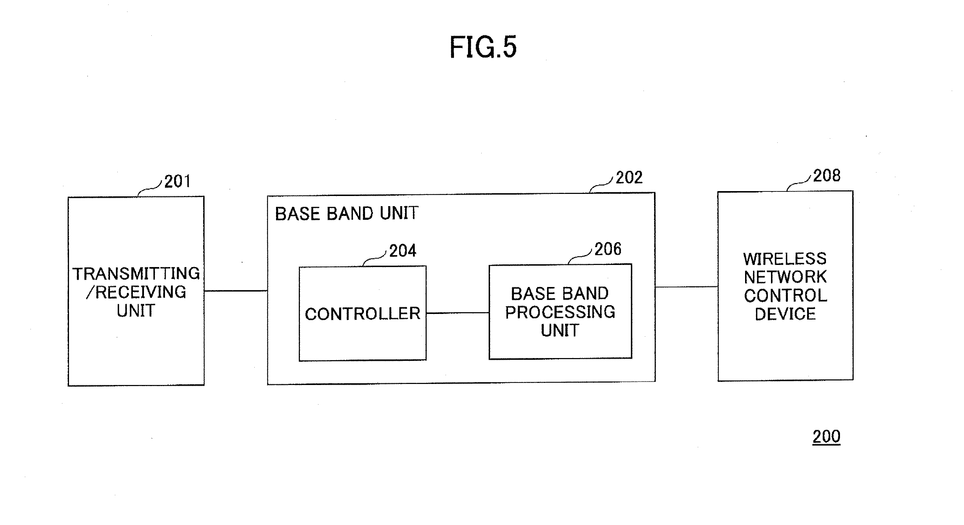

FIG. 5 illustrates the base station 200 according to an embodiment.

The base station 200 includes a transmitting/receiving unit 201, a base band unit 202, and a wireless network control device 208. The base band unit 202 is connected to the transmitting/receiving unit 201 and the wireless network control device 208 is connected to the base band unit 202.

The transmitting/receiving unit 201 exchanges wireless signals with the user terminal 100. The wireless signals received by an antenna are amplified and input to the transmitting/receiving unit 201. The transmitting/receiving unit 201 converts the wireless signals into frequencies, and inputs the frequencies to the base band unit 202. The transmitting/receiving unit 201 converts the signals from the base band unit 202 into wireless signals, and transmits the wireless signals via the antenna.

The base band unit 202 includes a controller 204. The controller 204 performs call control. Furthermore, the controller 204 performs protocol control.

The base band unit 202 includes a base band processing unit 206. The base band processing unit 206 is connected to the controller 204. The base band processing unit 206 performs a base band process according to instructions from the controller 204. The base band signals that have undergone the base band process by the base band processing unit 206 are converted into wireless signals by an RF unit (not illustrated), and are transmitted to the user terminal 100 by wireless communication. Furthermore, the base band processing unit 206 inputs the signals that have undergone the base band process to the wireless network control device 208.

The wireless network control device 208 performs a predetermined process based on signals from the base band processing unit 206. For example, the wireless network control device 208 may transfer the signals from the base band processing unit 206 to the destination of the signals.

### Functions of base station

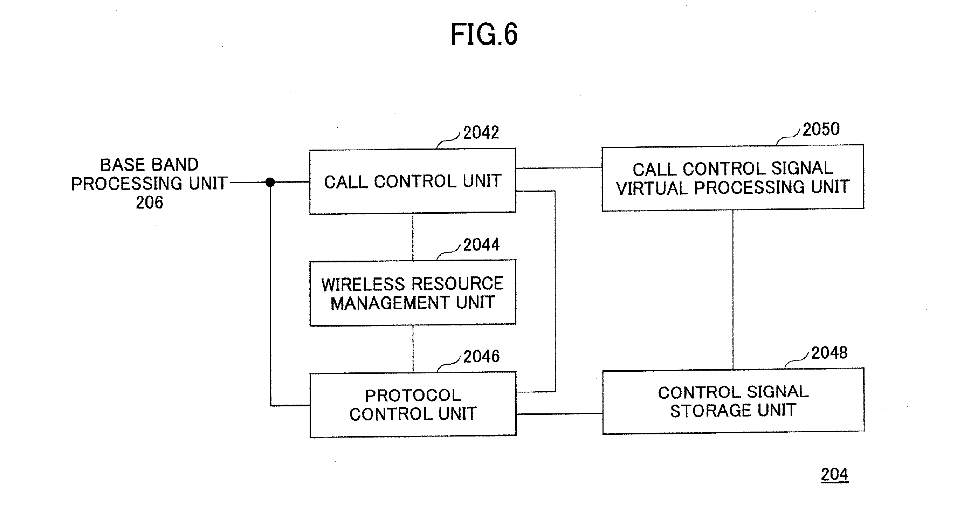

FIG. 6 illustrates the base station 200 according to an embodiment. FIG. 6 mainly indicates the functions of the controller 204.

Functions of the controller 204 include a function executed by a call control unit 2042. The call control unit 2042 is connected to the base band processing unit 206. The call control unit 2042 determines whether to perform a call connection process. For example, the call control unit 2042 determines to perform the call connection process according to a call connection procedure starting signal from the user terminal 100. Furthermore, when it is determined to perform a call connection process, the call control unit 2042 instructs a call control signal virtual processing unit 2050 to execute a call connection process.

Furthermore, the call control unit 2042 determines whether to transmit control signals. For example, when call connection control signals have not been transmitted from the user terminal 100 from which the call connection procedure starting signal has been transmitted, the call control unit 2042 determines to transmit control signals. When it is determined to transmit control signals, the call control unit 2042 controls a protocol control unit 2046 to establish control signals.

When a call connection control signal is not received from the user terminal 100, the control information to be transmitted to the user terminal 100 includes "RRC CONNECTION SETUP", "DL INFORMATION TRANSFER(Authentication Request)", "DL INFORMATION TRANSFER(Security Mode command)", "SECURITY MODE COMMAND", "UE CAPABILITY ENQUIRY", and "RRC CONNECTION RECONFIGURATION".

Furthermore, the call control unit 2042 receives call connection control signals from the user terminal 100. For example, the call control unit 2042 may receive the call connection control signal that is to be transmitted from the user terminal 100, when position registration is performed between the user terminal 100 and the MME 300. The call control unit 2042 inputs, to the protocol control unit 2046, the call connection control signals from the user terminal 100.

When the call control signal virtual processing unit 2050 has executed the call connection process corresponding to the user terminal 100 from which the call connection control signal has been received, the call control unit 2042 controls the base band processing unit 206 to transmit a signal expressing setup completion (hereinafter, "setup completion signal") to the user terminal 100. The base band processing unit 206 performs a base band process for transmitting the setup completion signal, according to control by the call control unit 2042. The setup completion signal that has undergone the base band process is converted into a wireless signal and transmitted to the user terminal 100.

Functions of the controller 204 include a function executed by a wireless resource management unit 2044. The wireless resource management unit 2044 is connected to the call control unit 2042. The wireless resource management unit 2044 manages wireless resources. Specifically, the wireless resource management unit 2044 manages wireless resources that are to be assigned to the user terminal 100.

Functions of the controller 204 include a function executed by the protocol control unit 2046. The protocol control unit 2046 is connected to the base band processing unit 206, the call control unit 2042, and the wireless resource management unit 2044. The protocol control unit 2046 establishes control signals according to the control of the call control unit 2042. The protocol control unit 2046 inputs the established control signals to the base band processing unit 206. The protocol control unit 2046 controls the base band processing unit 206 to transmit control signals. The base band processing unit 206 performs a base band process for transmitting the control signals according to the control of the protocol control unit 2046. The control signals that have undergone the base band process are converted into wireless signals and transmitted to the user terminal 100.

Furthermore, the protocol control unit 2046 resolves the call connection control signals from the base band processing unit 206. The protocol control unit 2046 inputs the resolved control signals to a control signal storage unit 2048. The resolved control signals may be the respective messages included in the call connection control signal.

Functions of the controller 204 include a function executed by the control signal storage unit 2048. The control signal storage unit 2048 is connected to the protocol control unit 2046. The control signal storage unit 2048 stores the call connection control signals to be input by the protocol control unit 2046. Specifically, there may be a call connection control signal storage table including information expressing whether a call connection control signal is stored for each user terminal. For example, in the call connection control signal storage table, flags are provided for expressing whether a call connection control signal is stored for each user terminal. Flags may be provided for expressing whether the respective control signals included in the call connection control signal are stored. When a call connection control signal is received, a flag corresponding to the user terminal of the transmission source of the call connection control signal indicates "received". Furthermore, the control signal storage unit 2048 monitors the access status between the base station 200 and the user terminal 100 that has transmitted the call connection control signal at predetermined cycles. As a result of monitoring the access status, when there is a user terminal 100 that is not accessed for a predetermined period, the flag corresponding to the user terminal 100 may indicate "not received" and the call connection control signal corresponding to the user terminal 100 may be deleted. In this case, the user terminal 100 is set not to transmit a call connection control signal to a base station 200 that has not been accessed for a predetermined time. Furthermore, when there is a user terminal 100 that is not accessed for a predetermined period, by deleting the call connection control signal corresponding to the user terminal 100, the storage amount at the base station 200 may be reduced.

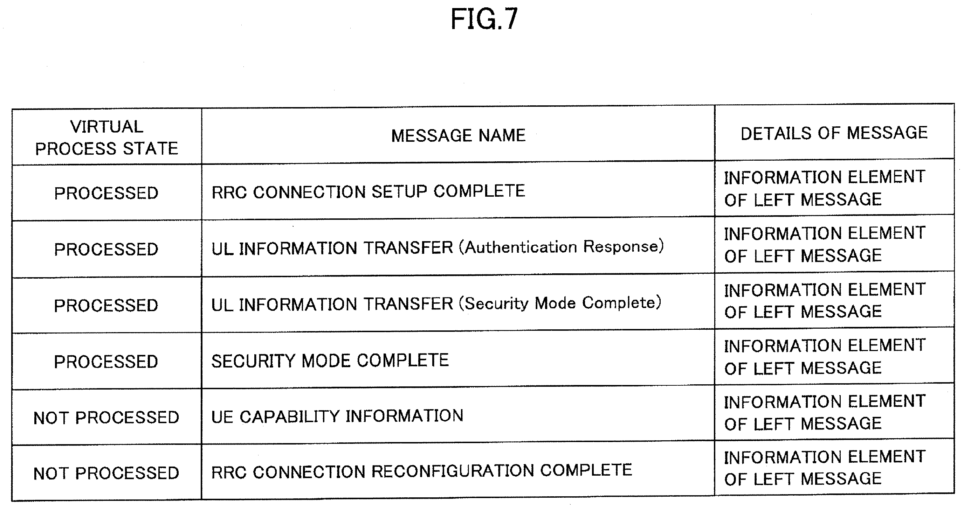

FIG. 7 indicates an example of a format of a call connection control signal storage table stored in the control signal storage unit 2048. In the call connection control signal storage table indicated in FIG. 7, message names included in the call connection control signal, details of the messages, and the process statuses of call connection are associated with each other. The call connection control signal storage table may be provided in each user terminal 100. Furthermore, a flag expressing whether a call connection control signal has been received may be provided for each message.

The example of FIG. 7 indicates that the processes up to message 4 have been performed, among the messages 1 through 6 described above. Furthermore, each message includes one or more information elements.

Functions of the controller 204 include a function executed by the call control signal virtual processing unit 2050. The call control signal virtual processing unit 2050 is connected to the call control unit 2042 and the control signal storage unit 2048. The call control signal virtual processing unit 2050 virtually executes a call connection process between the base station 200 and the user terminal 100 according to instructions to execute the call connection process from the call control unit 2042. Specifically, the call control signal virtual processing unit 2050 performs the call connection process between the base station 200 and the user terminal 100 that has transmitted a call connection procedure starting signal without exchanging control signals with the user terminal 100, when the control signals stored in the control signal storage unit 2048 can be used. When the call connection process between the base station 200 and the user terminal 100 ends, the call control signal virtual processing unit 2050 reports to the call control unit 2042 that the call connection process has ended. When a report that the call connection process has ended is made by the call control signal virtual processing unit 2050, the call control unit 2042 controls the base band processing unit 206 to transmit a setup completion signal. The base band processing unit 206 performs a base band process for transmitting the setup completion signal, according to control by the call control unit 2042. The setup completion signal that has undergone the base band process is converted into a wireless signal and transmitted to the user terminal 100.

### Switching center

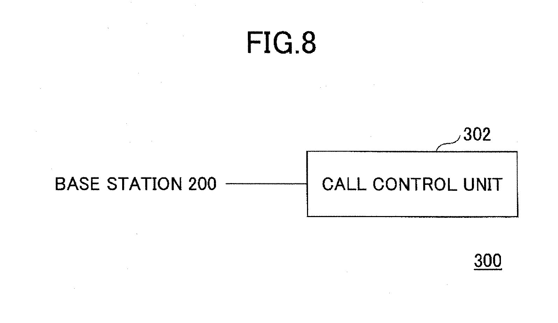

FIG. 8 illustrates the MME 300 according to an embodiment.

The MME 300 includes a call control unit 302. The call control unit 302 determines whether a call connection process is to be performed. Specifically, when a call connection procedure starting signal is transmitted from the user terminal 100, and a predetermined control signal is received from the base station 200, the call control unit 302 determines to perform a call connection process between the MME 300 and the base station 200. Specifically, the call control unit 302 may determine to perform a call connection process, when "INITIAL UE MESSAGE" (user terminal initialization message) is received from the base station 200. When it is determined to perform the call connection process, the call control unit 302 performs a call connection process between the MME 300 and the base station 200. When a call connection process is performed, the call control unit 302 exchanges control signals with the base station 200.

Furthermore, when a user terminal 100 enters the area covered by the base station 200 connected to the MME 300, the call control unit 302 registers the position of the user terminal 100.

### Operations of wireless communication system

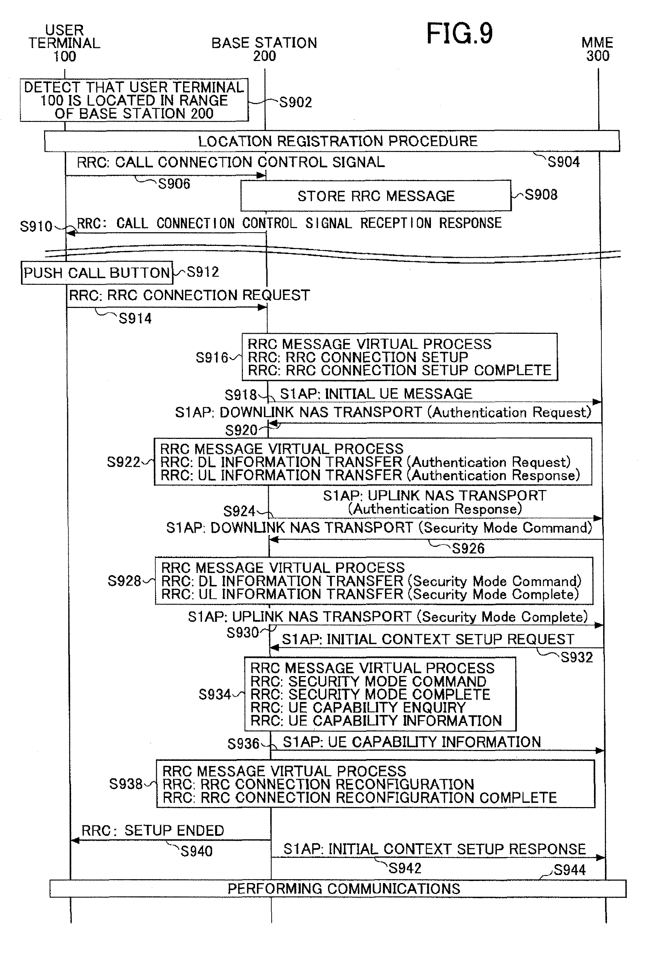

FIG. 9 indicates operations of the wireless communication system according to an embodiment.

The user terminal 100 detects that the user terminal 100 is located in the range of the base station 200 (step S902). Specifically, the call control unit 1042 detects that the user terminal 100 is located in the range of the base station 200. The call control unit 1042 detects that the user terminal 100 is located in the range of the base station 200 based on announcement information from the base station 200.

When the user terminal 100 detects that the user terminal 100 is located in the range of the base station 200, a location registration procedure is executed between the user terminal 100 and the MME 300 (step S904). Specifically, a location registration procedure is executed between the call control unit 1042 of the user terminal 100 and the call control unit 302 of the MME 300.

The user terminal 100 transmits a call connection control signal to the base station 200 (step S906). Specifically, the protocol control unit 1046 establishes a call connection control signal according to control by the call control unit 1042 and inputs the call connection control signal to the base band processing unit 106. The base band processing unit 106 performs a base band process for transmitting the call connection control signal according to control by the protocol control unit 1046. The call connection control signal that has undergone the base band process is converted into a wireless signal and transmitted to the base station 200. For example, the base band processing unit 106 may transmit the call connection control signal as an RRC message.

The control signal transmission status monitoring unit 1048 of the user terminal 100 sets a flag, which is for expressing whether a call connection control signal to be provided to each base station 200 has been transmitted, to "transmitted".

The base station 200 that has received the call connection control signal from the user terminal 100 stores the call connection control signal (step S908). Specifically, the call connection control signal from the user terminal 100 is input from the call control unit 2042 to the protocol control unit 2046. The protocol control unit 2046 resolves the information included in the call connection control signal into one or more pieces of control information, and stores the control information in the control signal storage unit 2048.

The base station 200 sets a flag corresponding to the user terminal 100 that is the transmission source of the call connection control signal to "received", among the flags for expressing whether a call connection control signal is stored for each user terminal included in the call connection control signal storage table.

When the control signal included in the call connection control signal is stored in the control signal storage unit 2048, the base station 200 transmits, to the user terminal 100, a call connection control signal reception response expressing that a call connection control signal has been received (step S91 0). Specifically, the protocol control unit 2046 stores the control signal included in the call connection control signal in the control signal storage unit 2048, and then transmits the call connection control signal reception response to the user terminal 100.

By performing the above steps, the process of storing the call connection control signal in the base station 200 ends.

The user terminal 100 is operated to make a call (step S912). Specifically, the user pushes the call button of the user terminal 100.

"RRC CONNECTION REQUEST" is transmitted from the user terminal 100 (step S914). Specifically, when the user terminal 100 is operated to make a call, the call control unit 1042 instructs the base band processing unit 106 to transmit "RRC CONNECTION REQUEST". The base band processing unit 106 performs a base band process for transmitting "RRC CONNECTION REQUEST" according to instructions from the call control unit 1042. "RRC CONNECTION REQUEST" that has undergone the base band process is converted into wireless signals and transmitted to the base station 200.

When "RRC CONNECTION REQUEST" is received from the user terminal 100, the base station 200 virtually processes the control information (step S916). Specifically, the call control signal virtual processing unit 2050 uses the control signals stored in the control signal storage unit 2048 to virtually perform a call connection process. Specifically, the call control signal virtual processing unit 2050 performs the process without transmitting "RRC CONNECTION SETUP" to the user terminal 100. According to "RRC CONNECTION SETUP COMPLETE" stored in the control signal storage unit 2048, it is assumed that "RRC CONNECTION SETUP COMPLETE" has been received from the user terminal 100, and the process is performed.

When the virtual "RRC CONNECTION SETUP" between the base station 200 and the user terminal 100 has ended, the base station 200 transmits "INITIAL UE MESSAGE" (user terminal initialization message) to the MME 300 (step S918). Specifically, when "RRC CONNECTION SETUP" ends, the call control signal virtual processing unit 2050 reports to the call control unit 2042 that "RRC CONNECTION SETUP" has ended. When it is reported that "RRC CONNECTION SETUP" has ended by the call control signal virtual processing unit 2050, the call control unit 2042 reports to the protocol control unit 2046 to transmit "INITIAL UE MESSAGE" to the MME 300. The protocol control unit 2046 establishes "INITIAL UE MESSAGE" according to instructions from the call control unit 2042. The protocol control unit 2046 controls the base band processing unit 206 to transmit "INITIAL UE MESSAGE". The base band processing unit 206 performs a base band process for transmitting "INITIAL UE MESSAGE" according to control by the protocol control unit 2046. The "INITIAL UE MESSAGE" that has undergone the base band process is converted into wireless signals and transmitted to the MME 300. For example, "INITIAL UE MESSAGE" is transmitted by S1AP (S1 Application Protocol).

The base station 200 receives "DOWNLINK NAS (Non-Access Stratum) TRANSPORT (Authentication Request)" from the MME 300 (step S920). Specifically, the call control unit 2042 receives "DOWNLINK NAS TRANSPORT (Authentication Request)" from the MME 300. The "DOWNLINK NAS TRANSPORT (Authentication Request)" is transmitted from the MME 300 by S1AP.

When the "DOWNLINK NAS TRANSPORT (Authentication Request)" is received from the MME 300, the base station 200 virtually processes the control information (step S922). Specifically, the call control signal virtual processing unit 2050 uses the control signals stored in the control signal storage unit 2048 to virtually perform the call connection process. Specifically, the call control signal virtual processing unit 2050 performs the process without transmitting "DL INFORMATION TRANSFER (Authentication Request)" to the user terminal 100. According to "UL INFORMATION TRANSFER (Authentication Request)" stored in the control signal storage unit 2048, it is assumed that "UL INFORMATION TRANSFER (Authentication Request)" has been received from the user terminal 100, and the process is performed.

When the virtual authentication process between the base station 200 and the user terminal 100 has ended, the base station 200 transmits, to the MME 300, "UPLINK NAS TRANSPORT (Authentication Response)" (step S924). Specifically, when the authentication process has ended, the call control signal virtual processing unit 2050 reports that the authentication process has ended to the call control unit 2042. When it is reported that the authentication process has ended by the call control signal virtual processing unit 2050, the call control unit 2042 reports, to the protocol control unit 2046, to transmit "UPLINK NAS TRANSPORT (Authentication Response)" to the MME 300. The protocol control unit 2046 establishes "UPLINK NAS TRANSPORT (Authentication Response)" according to instructions from the call control unit 2042. The protocol control unit 2046 controls the base band processing unit 206 to transmit "UPLINK NAS TRANSPORT (Authentication Response)". The base band processing unit 206 performs a base band process for transmitting "UPLINK NAS TRANSPORT (Authentication Response)" according to control by the protocol control unit 2046. The "UPLINK NAS TRANSPORT (Authentication Response)" that has undergone the base band process is converted into wireless signals and transmitted to the MME 300. For example, the "UPLINK NAS TRANSPORT (Authentication Response)" is transmitted according to S1AP.

The base station 200 receives "DOWNLINK NAS TRANSPORT (Security Mode Command)" from the MME 300 (step S926). Specifically, the call control unit 2042 receives "DOWNLINK NAS TRANSPORT (Security Mode Command)" from the MME 300. The "DOWNLINK NAS TRANSPORT (Security Mode Command)" is transmitted from the MME 300 according to S1AP.

When "DOWNLINK NAS TRANSPORT (Security Mode Command)" is received from the MME 300, the base station 200 virtually processes the control information (step S928). Specifically, the call control signal virtual processing unit 2050 uses the control signals stored in the control signal storage unit 2048 to virtually perform the call connection process. More specifically, the call control signal virtual processing unit 2050 performs the process without transmitting "DL INFORMATION TRANSFER (Security Mode Command)" to the user terminal 100. According to "DL INFORMATION TRANSFER (Security Mode Complete)" stored in the control signal storage unit 2048, it is assumed that "DL INFORMATION TRANSFER (Security Mode Complete)" has been received from the user terminal 100, and the process is performed.

When the virtual security mode setup process between the base station 200 and the user terminal 100 has ended, the base station 200 transmits "UPLINK NAS TRANSPORT (Security Mode Complete)" to the MME 300 (step S930). Specifically, when the security mode setup process has ended, the call control signal virtual processing unit 2050 reports that the security mode setup process has ended to the call control unit 2042. When it is reported that the security mode setup process has ended by the call control signal virtual processing unit 2050, the call control unit 2042 reports, to the protocol control unit 2046, to transmit "UPLINK NAS TRANSPORT (Security Mode Complete)" to the MME 300. The protocol control unit 2046 establishes "UPLINK NAS TRANSPORT (Security Mode Complete)" according to instructions from the call control unit 2042. The call control unit 2042 controls the base band processing unit 206 to transmit "UPLINK NAS TRANSPORT (Security Mode Complete)". The base band processing unit 206 performs a base band process for transmitting "UPLINK NAS TRANSPORT (Security Mode Complete)" according to instructions from the protocol control unit 2046. The "UPLINK NAS TRANSPORT (Security Mode Complete)" that has undergone the base band process is converted into wireless signals and transmitted to the MME 300. For example, "UPLINK NAS TRANSPORT (Security Mode Complete)" is transmitted according to S1AP.

The base station 200 receives "INITIAL CONTEXT SETUP REQUEST" from the MME 300 (step S932). Specifically, the call control unit 2042 receives "INITIAL CONTEXT SETUP REQUEST" from the MME 300. INITIAL CONTEXT SETUP REQUEST is transmitted from MME 300 according to S1AP.

When "INITIAL CONTEXT SETUP REQUEST" is received from the MME 300, the base station 200 virtually processes the control information (step S934). Specifically, the call control signal virtual processing unit 2050 uses the control signals stored in the control signal storage unit 2048 to virtually perform the call connection process. More specifically, the call control signal virtual processing unit 2050 performs the process without transmitting "SECURITY MODE COMMAND" to the user terminal 100. According to "SECURITY MODE COMPLETE" stored in the control signal storage unit 2048, it is assumed that "SECURITY MODE COMPLETE" has been received from the user terminal 100, and the process is performed. Furthermore, for example, the process is performed without transmitting "UE CAPABILITY ENQUIRY" to the user terminal 100. According to "UE CAPABILITY INFORMATION" stored in the control signal storage unit 2048, it is assumed that "UE CAPABILITY INFORMATION" has been received from the user terminal 100, and the process is performed.

When the virtual security mode setup process between the base station 200 and the user terminal 100 has ended, and the process of virtually acquiring information relevant to capabilities of the user terminal 100 has ended, the base station 200 transmits "UE CAPABILITY INFORMATION" to the MME 300 (step S936). Specifically, when the virtual security mode setup process between the base station 200 and the user terminal 100 has ended, and the process of virtually acquiring information relevant to capabilities of the user terminal 100 has ended, the call control signal virtual processing unit 2050 reports, to the call control unit 2042, that the virtual security mode setup process between the base station 200 and the user terminal 100 has ended, and the process of virtually acquiring information relevant to capabilities of the user terminal 100 has ended. When it is reported that the virtual security mode setup process between the base station 200 and the user terminal 100 has ended, and the process of virtually acquiring information relevant to capabilities of the user terminal 100 has ended by the call control signal virtual processing unit 2050, the call control unit 2042 reports to the protocol control unit 2046 to transmit "UE CAPABILITY INFORMATION" to the MME 300. The protocol control unit 2046 establishes "UE CAPABILITY INFORMATION" according to instructions from the call control unit 2042. The protocol control unit 2046 controls the base band processing unit 206 to transmit "UE CAPABILITY INFORMATION". The base band processing unit 206 performs a base band process for transmitting "UE CAPABILITY INFORMATION" according to control by the protocol control unit 2046. The "UE CAPABILITY INFORMATION" that has undergone the base band process is converted into wireless signals and transmitted to the MME 300. For example, the "UE CAPABILITY INFORMATION" is transmitted according to S1AP.

When "UE CAPABILITY INFORMATION" is transmitted to the MME 300, the base station 200 virtually processes the control information (step S938). Specifically, the call control signal virtual processing unit 2050 uses the control signals stored in the control signal storage unit 2048 to virtually perform a call connection process. More specifically, the call control signal virtual processing unit 2050 performs the process without transmitting "RRC CONNECTION RECONFIGURATION" to the user terminal 100. According to "RRC CONNECTION RECONFIGURATION COMPLETE" stored in the control signal storage unit 2048, it is assumed that "RRC CONNECTION RECONFIGURATION COMPLETE" has been received from the user terminal 100, and the process is performed.

When the virtual connection reconfiguration setup process between the base station 200 and the user terminal 100 has ended, the base station 200 transmits a setup completion signal to the user terminal 100 (step S940). Specifically, when the virtual connection reconfiguration setup process has ended, the call control signal virtual processing unit 2050 reports that the virtual connection reconfiguration setup process has ended to the call control unit 2042. When it is reported that the virtual connection reconfiguration setup process has ended by the call control signal virtual processing unit 2050, the call control unit 2042 reports to the protocol control unit 2046 to transmit a setup completion signal to the user terminal 100. The protocol control unit 2046 establishes a setup completion signal according to instructions from the call control unit 2042. The protocol control unit 2046 controls the base band processing unit 206 to transmit the setup completion signal. The base band processing unit 206 performs a base band process for transmitting the setup completion signal according to control by the protocol control unit 2046. The setup completion signal that has undergone the base band process is converted into a wireless signal and transmitted to the user terminal 100.

The base station 200 transmits "INITIAL CONTEXT SETUP RESPONSE" to the MME 300 (step S942). Specifically, the call control unit 2042 instructs the protocol control unit 2046 to transmit "INITIAL CONTEXT SETUP RESPONSE" to the MME 300. The protocol control unit 2046 transmits "INITIAL CONTEXT SETUP RESPONSE" to the MME 300 according to instructions from the call control unit 2042. For example, "INITIAL CONTEXT SETUP RESPONSE" is transmitted according to S1AP.

Communications can be performed between the user terminal 100 and the base station 200 (step S944).

According to the present embodiment, a call connection control signal including control signals to be transmitted from the user terminal is stored in advance in the base station. Accordingly, at the time of call control, the procedure of exchanging control signals between the user terminal and the base station can be omitted. Thus, the time required for call connection between the user terminal and the base station can be reduced.

Particularly, in a femto base station, user terminals that can use the femto base station are registered. The registered user terminals are given priority for using the wireless resources assigned to the femto base station. When the present embodiment is applied to a femto base station, call connection control signals from the registered user terminals may be stored. Accordingly, the time required for call connection can be reduced for the registered user terminals.

The present embodiment is not limited to wireless communications between a user terminal and a femto base station. The present embodiment is also applicable to wireless communications between a user terminal and a base station other than a femto base station.

Even when the present embodiment is applied to wireless communications between a user terminal and a base station other than a femto base station, user terminals that can send call connection control signals may be registered. For example, identifiers of user terminals that can transmit call connection control signals may be registered in the base station. For example, IMSI (International Mobile Subscriber Identity) may be used as identifiers of the user terminals. The user terminal determines whether the user terminal is registered in a base station, when the user terminal is located in the range of the base station. Specifically, the user terminal determines whether the user terminal is registered in the base station, based on announcement information transmitted from the base station. When it is determined that the user terminal is registered in the base station, the user terminal may transmit a call connection control signal to the base station. The base station may determine whether to store the call connection control signal from the user terminal based on the identifier included in the uplink signal from the user terminal. By storing call connection control signals of only registered user terminals, the number of call connection control signals to be stored in the base station can be limited, and therefore the storage amount at the base station can be reduced.

### Modification

A modification of the wireless communication system is described with reference to FIG. 1.

The user terminal 100 transmits plural call connection control signals to the base station 200. Specifically, the respective call connection control signals include control information having information elements of different contents. For example, the call connection control signals may be prepared according to QoS (Quality of Service). Specifically, a call connection control signal according to GBR (Guaranteed Bit Rate), and a call connection control signal according to Non-GBR may be prepared.

In the present modification, as one example, a call connection control signal according to GBR and a call connection control signal according to Non-GBR are prepared. Three or more call connection control signals may be prepared. Furthermore, the base station 200 may specify the number of call connection control signals that can be received. In the following, a call connection control signal according to GBR is referred to as "pattern I" and a call connection control signal according to Non-GBR is referred to as "pattern II".

The base station 200 stores the call connection control signals from the user terminal 100. When a call connection procedure starting signal is received from the user terminal 100, a call connection control signal stored in advance is used to execute a call connection process. The base station 200 exchanges control signals with the MME 300 when performing the call connection process.

### User terminal (modification)

A modification of the user terminal 100 is described with reference to FIG. 2.

### Functions of user terminal (modification)

A modification of the user terminal 100 is described with reference to FIG. 3.

The protocol control unit 1046 establishes plural call connection control signals and control signals according to control by the call control unit 1042. Information elements of control signals included in the plural call connection control signals may be different according to QoS. For example, different values may be included.

### Base station (modification)

A modification of the base station 200 is described with reference to FIG. 5.

### Functions of base station (modification)

A modification of the base station 200 is described with reference to FIG. 6.

The call control signal virtual processing unit 2050 virtually executes a call connection process between the base station 200 and the user terminal 100 according to instructions to execute a call connection process from the call control unit 2042. When virtually executing the call connection process, the call control signal virtual processing unit 2050 selects a call connection control signal to be used from plural call connection control signals, according to instructions to execute a call connection process from the call control unit 2042. For example, QoS requested by the user may be included in the call connection procedure starting signal to be transmitted from the user terminal 100. The call control signal virtual processing unit 2050 may select the call connection control signal to be used based on the QoS. Furthermore, the call control signal virtual processing unit 2050 may select the call connection control signal to be used according to predetermined conditions. The predetermined conditions may be specified by the user terminal 100 or set in the network.

The call control signal virtual processing unit 2050 does not exchange control signals with the user terminal 100 that transmitted the call connection procedure starting signal; the call control signal virtual processing unit 2050 uses a call connection control signal selected from the plural call connection control signals stored in the control signal storage unit 2048 to virtually perform the call connection process.

### Operations of wireless communication system (modification)

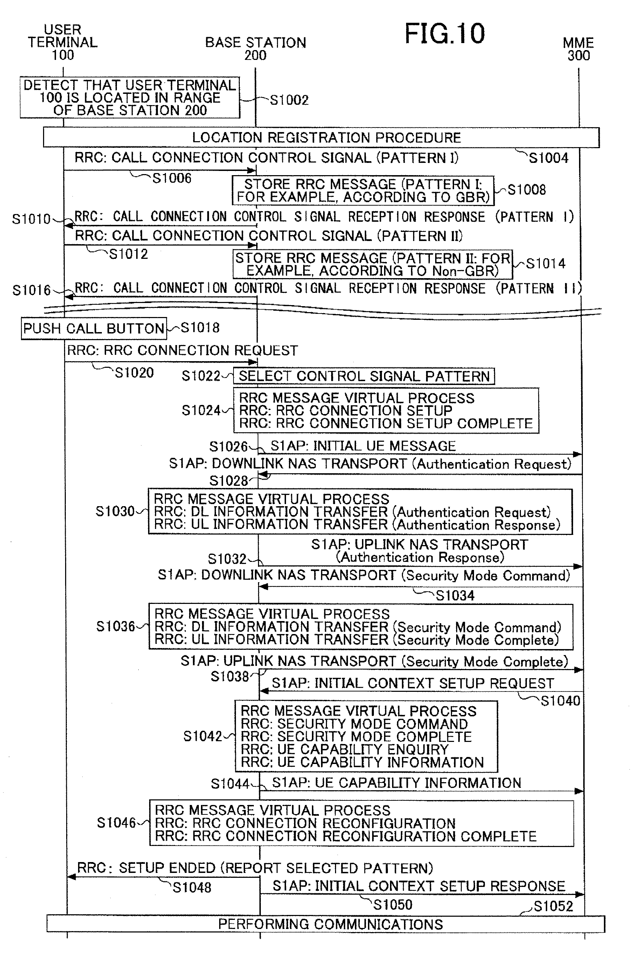

FIG. 10 indicates operations of the wireless communication system according to a modification.

Operations of the wireless communication system according to a modification are different from the operations described with reference to FIG. 9 in that the user terminal 100 transmits plural call connection control signals and the base station 200 selects the call connection control signal to be used from the plural call connection control signals.

The user terminal 100 detects that the user terminal 100 is located in the range of the base station 200 (step S1002). Specifically, the call control unit 1042 detects that the user terminal 100 is located in the range of the base station 200. The call control unit 1042 detects that the user terminal 100 is located in the range of the base station 200 based on announcement information from the base station 200.

When the user terminal 100 detects that the user terminal 100 is located in the range of the base station 200, a location registration procedure is executed between the user terminal 100 and the MME 300 (step S1004). Specifically, a location registration procedure is executed between the call control unit 1042 of the user terminal 100 and the call control unit 302 of the MME 300.

The user terminal 100 transmits a call connection control signal (pattern I) to the base station 200 (step S1006). Specifically, the protocol control unit 1046 establishes a call connection control signal (pattern I) according to control by the call control unit 1042 and inputs the call connection control signal (pattern I) to the base band processing unit 106. The base band processing unit 106 performs a base band process for transmitting a call connection control signal (pattern I) according to control by the protocol control unit 1046. The call connection control signal (pattern I) that has undergone the base band process is converted into a wireless signal and transmitted to the base station 200. For example, the base band processing unit 106 may transmit the call connection control signal (pattern I) as an RRC message.

The control signal transmission status monitoring unit 1048 of the user terminal 100 sets a flag, which is for expressing whether a call connection control signal (pattern I) to be provided to each base station 200 has been transmitted, to "transmitted".

The base station 200 that has received the call connection control signal (pattern I) from the user terminal 100 stores the call connection control signal (pattern I) (step S1008). Specifically, the call connection control signal (pattern I) from the user terminal 100 is input from the call control unit 2042 to the protocol control unit 2046. The protocol control unit 2046 resolves the information included in the call connection control signal (pattern I) into one or more pieces of control information, and stores the control information in the control signal storage unit 2048.

The base station 200 sets a flag corresponding to the user terminal 100 that is the transmission source of the call connection control signal to "received", among the flags for expressing whether a call connection control signal is stored for each user terminal included in the call connection control signal storage table.

When the control signal included in the call connection control signal is stored in the control signal storage unit 2048, the base station 200 transmits, to the user terminal 100, a call connection control signal reception response expressing that a call connection control signal (pattern I) has been received (step S1010). Specifically, the protocol control unit 2046 stores the control signal included in the call connection control signal in the control signal storage unit 2048, and then transmits the call connection control signal reception response to the user terminal 100.

The user terminal 100 transmits a call connection control signal (pattern II) to the base station 200 (step S1012). Specifically, the protocol control unit 1046 establishes a call connection control signal (pattern II) according to control by the call control unit 1042 and inputs the call connection control signal (pattern II) to the base band processing unit 106. The base band processing unit 106 performs a base band process for transmitting a call connection control signal (pattern II) according to control by the protocol control unit 1046. The call connection control signal (pattern II) that has undergone the base band process is converted into a wireless signal and transmitted to the base station 200. For example, the base band processing unit 106 may transmit the call connection control signal (pattern II) as an RRC message.

The control signal transmission status monitoring unit 1048 of the user terminal 100 sets a flag, which is for expressing whether a call connection control signal (pattern II) to be provided to each base station 200 has been transmitted, to "transmitted". When plural call connection control signals are transmitted, it may be confirmed whether flags for expressing whether call connection control signals have been transmitted, have been set to "transmitted".

The base station 200 that has received the call connection control signal (pattern II) from the user terminal 100 stores the call connection control signal (pattern II) (step S1014). Specifically, the call connection control signal (pattern II) from the user terminal 100 is input from the call control unit 2042 to the protocol control unit 2046. The protocol control unit 2046 resolves the information included in the call connection control signal (pattern II) into one or more pieces of control information, and stores the control information in the control signal storage unit 2048.

The base station 200 sets a flag corresponding to the user terminal 100 that is the transmission source of the call connection control signal to "received", among the flags for expressing whether a call connection control signal is stored for each user terminal included in the call connection control signal storage table.

When the control signal included in the call connection control signal is stored in the control signal storage unit 2048, the base station 200 transmits, to the user terminal 100, a call connection control signal reception response expressing that a call connection control signal (pattern II) has been received (step S1016). Specifically, the protocol control unit 2046 stores the control signal included in the call connection control signal in the control signal storage unit 2048, and then transmits the call connection control signal reception response to the user terminal 100.

By performing the above steps, the process of storing the call connection control signals in the base station 200 ends.

The user terminal 100 is operated to make a call (step S1018). Specifically, the user pushes the call button of the user terminal 100.

"RRC CONNECTION REQUEST" is transmitted from the user terminal 100 (step S1020). Specifically, when the user terminal 100 is operated to make a call, the call control unit 1042 instructs the base band processing unit 106 to transmit "RRC CONNECTION REQUEST". The base band processing unit 106 performs a base band process for transmitting "RRC CONNECTION REQUEST" according to instructions from the call control unit 1042. "RRC CONNECTION REQUEST" that has undergone the base band process is converted into wireless signals and transmitted to the base station 200.

When "RRC CONNECTION REQUEST" is received from the user terminal 100, the base station 200 selects the call connection control signal to be used from the plural call connection control signals that are stored (step S1022). Specifically, the call control signal virtual processing unit 2050 selects either the call connection control signal (pattern I) or the call connection control signal (pattern II) stored in the control signal storage unit 2048. For example, when QoS requested by the user is included in the call connection procedure starting signal transmitted by the user terminal 100, the call control signal virtual processing unit 2050 may select the call connection control signal to be used based on QoS. Furthermore, the call control signal virtual processing unit 2050 may select the call connection control signal to be used based on predetermined conditions.

Thereafter, a process is virtually performed with the use of the selected call connection control signal.

The processes of steps S1024 through S1052 are the same as the processes of step S916 through S944 in FIG. 9. However, in step S1048, the setup completion signal transmitted from the base station 200 to the user terminal 100 includes information expressing the selected call connection control signal.

According to the present modification, the user terminal transmits plural call connection control signals, and the base station stores plural call connection control signals from the user terminal. The base station selects the call connection control signal to be used from among the plural call connection control signals, according to a call connection procedure starting signal from the user terminal. The base station uses the selected call connection control signal to virtually perform the process. As a call connection control signal to be used is selected from among the plural call connection control signals from the user terminal, more detailed control can be implemented. Specifically, in the present modification, a call connection control signal according to GBR and a call connection control signal according to Non-GBR are prepared, and therefore the wireless band frequency can be controlled.

The present modification is not limited to wireless communications between a user terminal and a femto base station. The present modification is also applicable to wireless communications between a user terminal and a base station other than a femto base station. Even when the present modification is applied to wireless communications between a user terminal and a base station other than a femto base station, user terminals that can send call connection control signals may be registered. For example, identifies of user terminals that can transmit call connection control signals may be registered in the base station. For example, IMSI (International Mobile Subscriber Identity) may be used as identifiers of the user terminals. The user terminal determines whether the user terminal is registered in a base station, when the user terminal is located in the range of the base station. Specifically, the user terminal determines whether the user terminal is registered in the base station, based on announcement information transmitted from the base station. When it is determined that the user terminal is registered in the base station, the user terminal may transmit plural call connection control signals to the base station. The base station may determine whether to store the plural call connection control signals from the user terminal based on the identifier included in the uplink signal from the user terminal. By storing call connection control signals of only registered user terminals, the number of call connection control signals to be stored in the base station can be limited, and therefore the storage amount at the base station can be reduced.

According to an aspect of the present invention, the time required for call connection can be reduced.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

## Claims

1. A wireless communication system **characterized by**:
a user terminal; and
a base station configured to perform wireless communication with the user terminal, wherein
the user terminal includes
a call connection control signal generating unit configured to generate a call connection control signal including a control signal to be used when call connection is performed between the user terminal and the base station,
a call connection control signal transmitting unit configured to transmit, to the base station, the call connection control signal generated by the call connection control signal generating unit, and
a call connection request transmitting unit configured to transmit a call connection request to the base station according to an operation for making a call, wherein
the base station includes
a call connection control signal receiving unit configured to receive the call connection control signal from the user terminal,
a storage unit configured to store the call connection control signal received by the call connection control signal receiving unit, and
a call control signal virtual processing unit configured to perform the call connection between the base station and the user terminal with the use of the call connection control signal stored in the storage unit, according to the call connection request from the user terminal.

2. The wireless communication system according to claim 1, **characterized in that**
the call connection control signal transmitting unit transmits the call connection control signal when the user terminal is located in a range of the base station, and
the call connection control signal receiving unit receives the call connection control signal that is to be transmitted when the user terminal is located in the range of the base station.

3. The wireless communication system according to claim 1 or 2, **characterized in that**
the call connection control signal generating unit generates a plurality of the call connection control signals,
the call connection control signal transmitting unit transmits the plural call connection control signals generated by the call connection control signal generating unit,
the call connection control signal receiving unit receives the plural call connection control signals,
the storage unit stores the plural call connection control signals received by the call connection control signal receiving unit, and
the call control signal virtual processing unit selects the call connection control signal to be used for the call connection between the user terminal and the base station from among the plural call connection control signals stored in the storage unit, according to the call connection request from the user terminal.

4. The wireless communication system according to any one of claims 1 through 3, **characterized in that** the base station includes
an access status monitoring unit configured to monitor an access status between the base station and the user terminal corresponding to the call connection control signal stored in the storage unit, and
a call connection control information deleting unit configured to delete the call connection control signal stored in the storage unit relevant to the user terminal corresponding to the call connection control signal stored in the storage unit, when the access status monitored by the access status monitoring unit expresses that access has not been performed for a predetermined time period.

5. The wireless communication system according to claim 3, **characterized in that**
the call connection control signal generating unit generates the plural call connection control signals including the control signals having information elements of different contents.

6. The wireless communication system according to claim 5, **characterized in that**
the call connection control signal generating unit generates the plural call connection control signals including the control signals having information elements of different contents relevant to services.

7. The wireless communication system according to claim 1, **characterized in that**
the base station includes a user terminal registration unit configured to register an identifier of the user terminal whose call connection control signal is to be stored, and
the storage unit stores the call connection control signal from the user terminal registered in the user terminal registration unit.

8. A user terminal for performing wireless communication with a base station, the user terminal **characterized by**:
a call connection control signal generating unit configured to generate a call connection control signal including a control signal to be used when call connection is performed between the user terminal and the base station;
a call connection control signal transmitting unit configured to transmit, to the base station, the call connection control signal generated by the call connection control signal generating unit; and
a call connection request transmitting unit configured to transmit a call connection request to the base station according to an operation for making a call, wherein
the call connection control signal transmitted from the user terminal to the base station is stored by the base station, and the stored call connection control signal is used by the base station according to the call connection request from the user terminal to perform the call connection between the user terminal and the base station.

9. A base station for performing wireless communication with a user terminal, the base station **characterized by**:
a call connection control signal receiving unit configured to receive a call connection control signal from the user terminal;
a storage unit configured to store the call connection control signal received by the call connection control signal receiving unit; and
a call control signal virtual processing unit configured to perform call connection between the base station and the user terminal with the use of the call connection control signal stored in the storage unit, according to a call connection request from the user terminal, wherein
the call connection control signal, including a control signal to be used when the call connection is performed between the user terminal and the base station, is generated by the user terminal, the generated call connection control signal is transmitted from the user terminal to the base station, and the call connection request is transmitted from the user terminal to the base station according to an operation for making a call.

10. A communication method performed in a wireless communication system, the communication method **characterized by**:
generating, by a user terminal, a call connection control signal including a control signal to be used when call connection is performed between the user terminal and a base station configured to perform wireless communication with the user terminal;
transmitting, by the user terminal, the call connection control signal generated at the generating;
transmitting, by the user terminal, a call connection request to the base station according to an operation for making a call;
receiving, by the base station, the call connection control signal from the user terminal;
storing, by the base station, the call connection control signal received at the receiving; and
performing, by the base station, the call connection between the base station and the user terminal with the use of the call connection control signal stored at the storing, according to the call connection request from the user terminal.
